# EUROPEAN PATENT SPECIFICATION

(11) **EP 3 473 459 B1**
(45) Date of publication and mention of the grant of the patent: **19.08.2020**
(21) Application number: 18201385.4
(22) Date of filing: 19.10.2018
(51) Int. Cl.: B60J 7/047

(54) **A RETRACTABLE ROOF**
EINZIEHBARES DACH
TOIT RÉTRACTABLE

(30) Priority: 23.10.2017 IT 201700119592
(43) Date of publication of application: 24.04.2019
(73) Proprietor: OPAC S.R.L., 10121 Torino (IT)
(72) Inventor: SACCO, Luca, I-10040 RIVALTA DI TORINO (Torino) (IT)
(74) Representative: Vanzini, Christian

(56) References cited:
- US-A1- 2004 090 091
- US-A1- 2004 189 058
- US-B1- 6 502 898

## Description

The present invention refers to a retractable roof, comprising
a pair of parallel guides,
a plurality of slats movable along the guides between a closed position, wherein the slats are lowered and cover an area between the guides, and an open position, wherein the slats are raised and packed at an end of the guides, and
a plurality of sliders slidable along the guides, wherein each slat is at each end supported by one of the guides through two of said sliders - hereinafter first and second slider -, the slat being hinged to the second slider and connected to the first and second sliders through a linkage.

A similar retractable roof is disclosed US 6 502 898 B1.

The present invention is characterized in that the linkage comprises a first rod hinged to each slider at a first hinge point and a second rod hinged to each slider at a second hinge point, the first rod of the first slider and the second rod of the second slider being further connected to each other by means of a third rod hinged to both the first and second slider, and
a rocker is further hinged to each slider, said rocker comprising a first arm and a second arm and being configured to have a barycenter at the first arm, whereby a driving element arranged on the respective slat is provided, the driving element being suitable to be engaged by the second arm in an inactive position of the rocker, a striker element being further provided arranged on the slider, whereby the striker element of the second slider is adapted to be engaged by a hooking end of the first arm of the rocker of the first slider in a hooking position wherein the first and the second slider are fixed to one another,
wherein in the open position the sliders are in the hooking position, and
wherein during movement from the open position to the closed position, the driving element of the slat hinged to the first slider engages the first arm of the rocker of the first slider to lift the hooking end of the rocker of the first slider and disengage the hooking end from the striker element of the second slider, allowing the first slider to move away from the second slider.

In particular, the third rod is hinged to the first rod of the first slider at an intermediate point of the latter and hinged to an end of the second rod of the second slider.

It is moreover provided that the plurality of sliders comprises two series of sliders respectively arranged on the two guides, wherein an end slider of each of the two series is operatively connected to transmission means for moving the two series of sliders, and an opposite end slider of each of the two series is connected to a slat and to a fixed part of the guide through a linkage.

Preferably, the first rod of the linkage has a hooking appendage near the first hinge point, such appendage being designed to engage a seat made in the respective slider to lock the slat of the second slider to the first slider in the closed position.

Preferred embodiments of the invention are defined in the dependent claims, which are intended as an integral part of the present description.

Further features and advantages of the retractable roof according to the invention will become more apparent in the following detailed description of an embodiment of the invention, made with reference to the accompanying drawings, provided purely to be illustrative and non-limiting, wherein
- figures 1 and 2 are perspective views of a retractable roof according to the invention, respectively in a closed position and an open position;
- figures 3 and 4 are respectively a side elevation view and a perspective view of a detail of the retractable roof in the closed position;
- figures 5 and 6 are respectively a side elevation view and a perspective view of a detail of the retractable roof, in an intermediate position; and
- figure 7 is a side elevation view of a detail of the retractable roof in the open position.

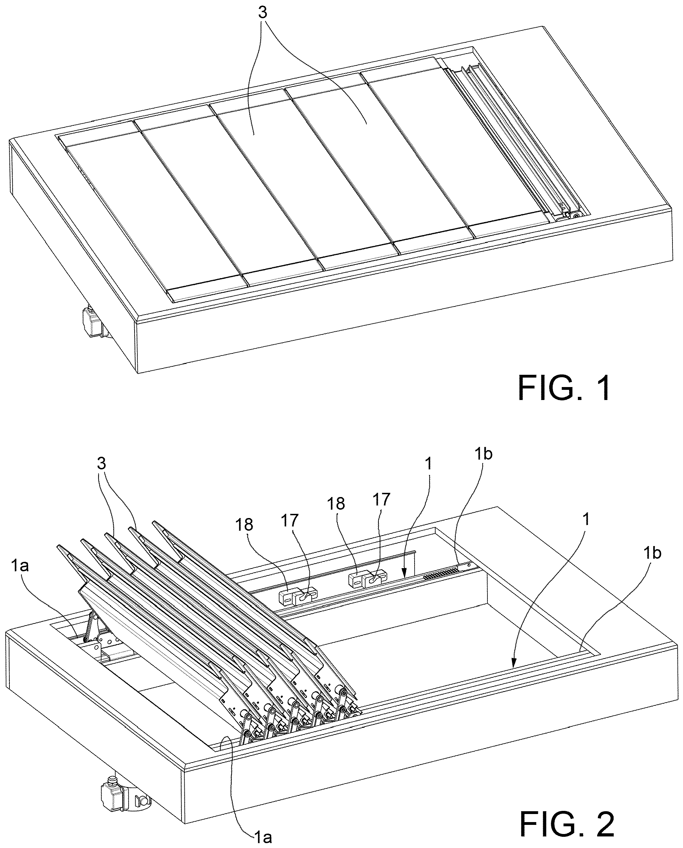

Figures 1 and 2 show a retractable roof, installed in an opening made on the roof of a vehicle, such as a boat.

The retractable roof consists of a pair of parallel guides 1, arranged on opposite sides of the opening and having opposite ends 1a and 1b. The retractable roof further comprises a plurality of slats 3 movable along the guides 1 between a closed position (figure 1), wherein the slats 3 are lowered and cover the opening between the guides 1, and an open position (figure 2), wherein the slats 3 are raised and packed at one end of the guides 1.

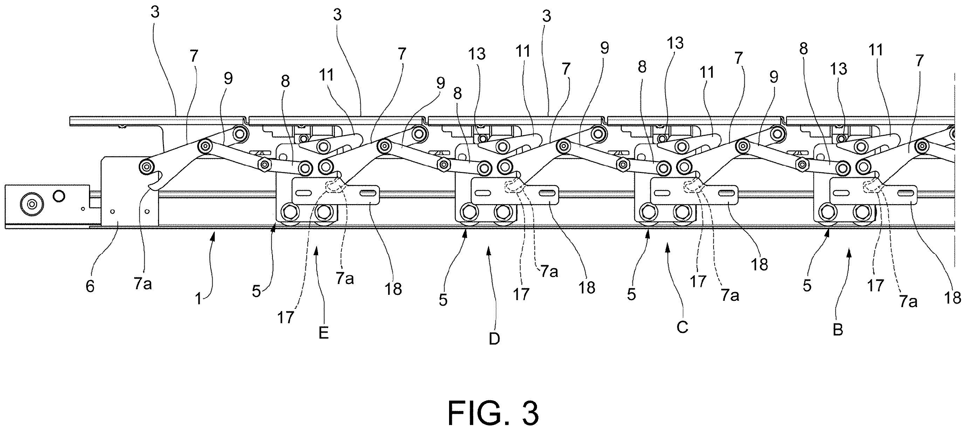

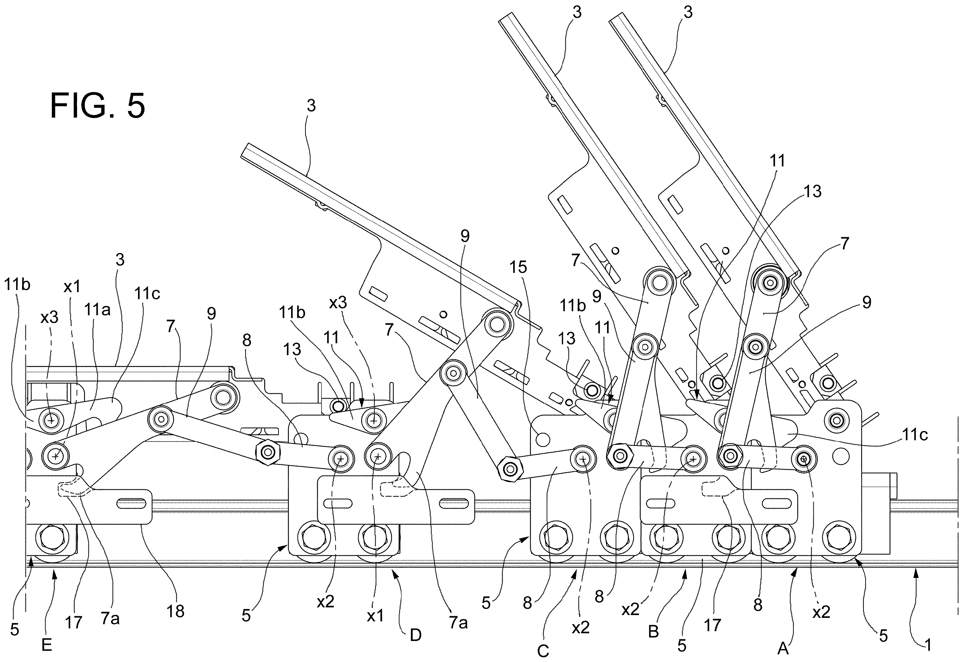

With reference also to figures 3-7, the retractable roof also comprises two sets of sliders 5 sliding along the guides 1, only one of which is represented in the figures. Each slat 3 is at each end supported by one of the guides 1 by means of two sliders 5, which hereinafter will be called first and second slider. Such distinction will only be used for simplicity, as the sliders are all the same, and as each slider is shared between adjacent slats (and thus may be designated as the first or second slider according to the slat considered), with the exception of one end slider (the one to the right in figure 5). A transmission means, such as a cable or strap, is attached to this end slider to enable the handling of the retractable roof. In figures 3, 5 and 7 the movement from the closed position to the open position is from right to left, while the movement from the open position to the closed position is from left to right.

Each slat 3 is connected to a pair of sliders 5 by means of a linkage, and an identical linkage is further provided to connect an end slat 3 (the leftmost one in figure 3) on one side to an end slider 5 opposite to the end slider actuated by the transmission means and on the other side to a fixed part 6 at the end 1a of the guide where the slats 3 are packed in the open position.

The linkage comprises a first rod 7 hinged to each slider 5 at a first hinge point x1 and a second rod 8 hinged to each slider 5 (except for the end slider actuated by the transmission means) at a second hinge point x2. With reference to the pair of sliders connected to a single slat 3, the first rod 7 of the first slider 5 and the second rod 8 of the second slider 5 are also connected to each other by means of a third rod 9 hinged to both. In particular, the third rod 9 is hinged to the first rod 7 of the first slider 5 at an intermediate point of the latter and is hinged to an end of the second rod 8 of the second slider 5. The slat 3 is further hinged at one end to the second slider 5. The result is an articulated polygon formed by the second slider 5, by the slat 33, by one side of the first rod 7 of the first slider 5, by the third rod 9 and by the second rod 8 and by a connecting rod 9 hinged on one side to the first rod 7 of the first slider 5 and on the other side to the slat 3.

A rocker 11 is also hinged to each slider 5 (with the exception of the end slider spaced away from the fixed part 6) at a hinge point x3. The rocker 11 comprises a first arm 11a and a second arm 11b. The rocker 11 is configured so as to have a barycenter at the first arm 11a. Consequently, the rocker 11 would tend by gravity to rotate, clockwise in the figures, so as to bring the first arm 11a below the hinge point x3.

Thus, a driving element 13 arranged on each slat 3 is provided and is adapted to be engaged by the second arm 11b in an inactive position of the rocker 11 (figure 3).

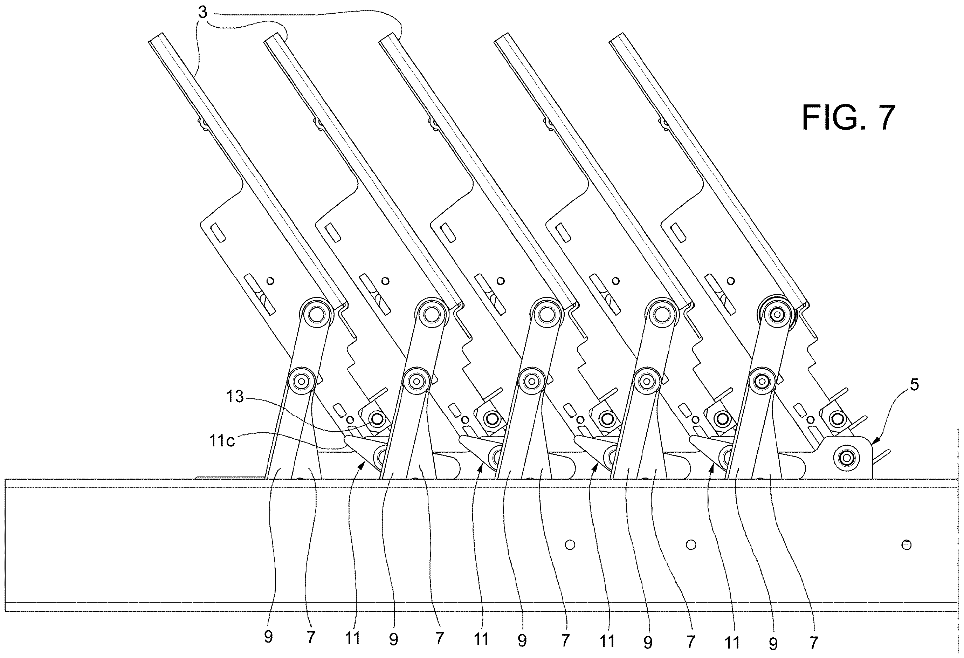

A striker element 15 is further provided, arranged on each slider 5. With reference to the pair of sliders connected to a single slat 3, the striker element 15 of the second slider 5 is adapted to be engaged by the hooking end 11c of the first arm 11a of the rocker 11 of the first slider 5 in a hooking position wherein the first and second sliders 5 are made integral to one another (figures 5 and 7).

During a movement from the open position to the closed position, with reference to the pair of sliders associated with a single slat, the driving element 13 of the slat 3 hinged to the first slider 5 engages the first arm 11b of the rocker 11 of the first slider to lift the hooking end 11c of the rocker 11 of the first slider 5 and disengage it from the striker element 15 of the second slider 5, allowing the second slider 5 to move away from the first slider 5.

The first rod 7 of the linkage has a hooking appendage 7a close to the first hinge point x1, such appendage being adapted to engage a respective seat 17 formed integrally with the guide 1 to lock the slat 3 in the closed position. As may be seen in figure 2, in the example shown, the seats 17 are obtained on their respective blocks 18 arranged integrally with the guide 1. In order to permit the insertion of the hooking appendages 7a in their respective seats 17, the seats 17 are positioned in such a way that each one is, in the closed position, facing a respective slider 5.

The operation of the retractable roof described above will now be described. For clarity, the slider 5 will also be indicated in sequence respectively at the letters A, B, C, D, E in figures 3 and 5, the end slider actuated by the transmission means being indicated at A and the end slider near the fixed part 6 being indicated at E.

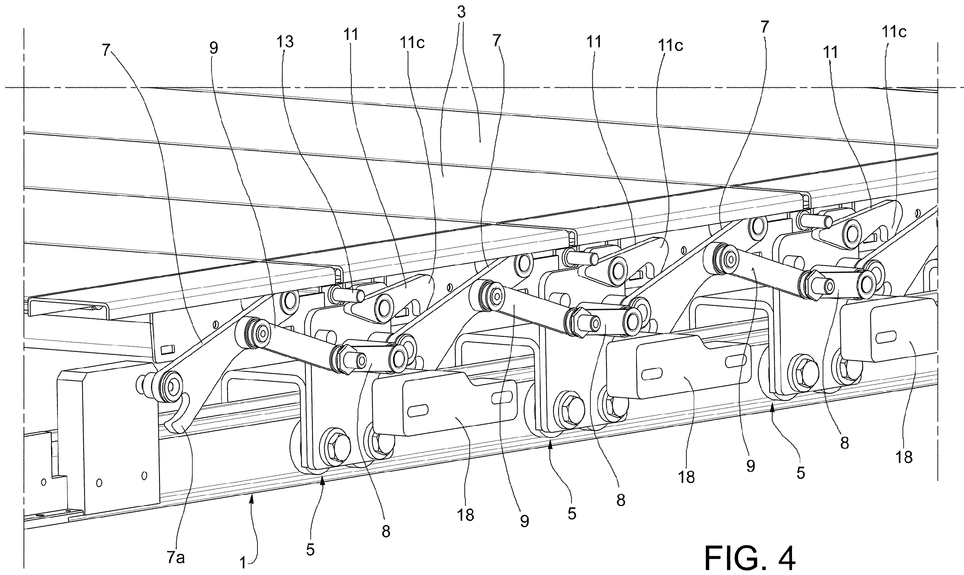

In the closed position shown in figures 3 and 4, the sliders 5 are at maximum distance from one another. The linkages connecting the sliders 5 to the slats 3 are therefore extended and the slats 3 are consequently lowered, so as to form a single plane without interruption. The rockers 11 are in the inactive position, with the respective second arms 11b resting against the respective driving elements 13.

By means of a transmission means, the end slider A (shown in figure 5) is controlled in such a way as to move towards the open position (to the left in figures 3-7). The approach of the end slider A to the immediately successive slider B causes the rods 7 and 8 to be folded, and therefore the associated slat 3 to be lifted. At a certain moment the slider A comes into contact with the slider B, which is then pushed towards the open position. This causes the rods 7 and 8 located between the slider B and the slider C to be folded and the associated slat 3 to be lifted.

Lifting the slat 3 associated with the sliders B and C involves lifting the driving element 13 integral thereto. The rocker 11 of the slider B, the second arm 11b of which is initially resting against the driving element 13, follows the driving element 13 by gravity for a first part of the movement thereof, up to a point wherein it loses contact with the driving element 13. The rotation induced by the force of gravity acting on the rocker 11 causes the hooking end 11c of the rocker 11 of the slider B to engage the striker element 15 on the slider A in contact with the slider B, causing the coupling between such two sliders.

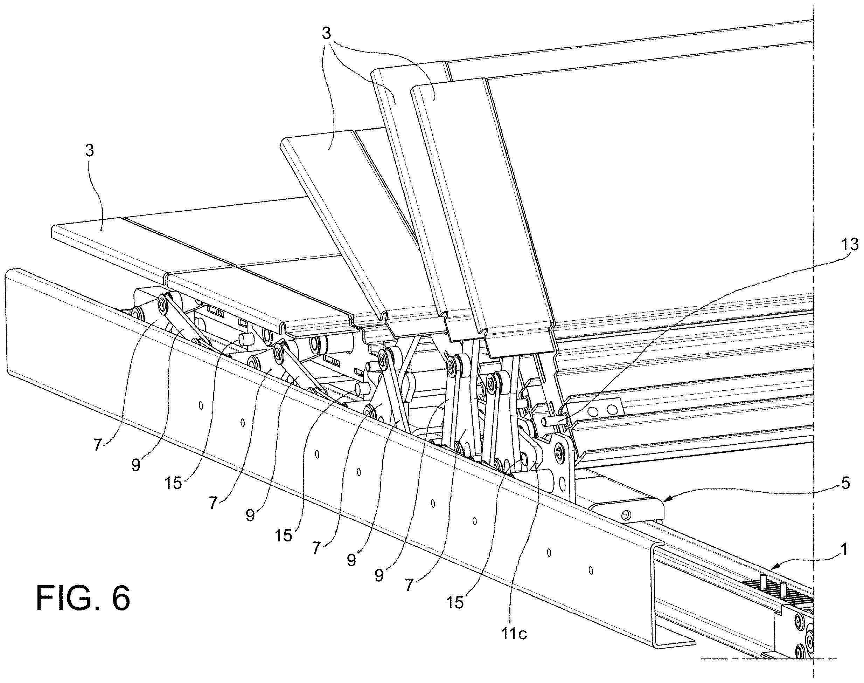

The movement described above involves all the sliders in sequence (figures 5 and 6), until the open position is reached, represented in figure 7, wherein the sliders A-E are all in the hooking position.

By actuating the transmission means in the opposite direction, the sliders E-A are initially dragged all together, being hooked to one another.

Moving the slider E away from the fixed part 6 causes the linkage connecting the slider E to the fixed part 6 to extend, and thus the relevant slat 3 to lower.

At a certain point when the slat 3 is lowered, the relevant driving element 13 engages the second arm 11b of the rocker 11 associated with the slider E, causing the hooking end 11c of the rocker 11 to be lifted from the striker element 15 of the successive slider D. In this way, the release of the slider D from the slider E is obtained, which in the meantime has reached its position of maximum distance from the end 1a of the guide 1 (i.e. the position occupied by the slider E in the closed position of the roof). In such position the slat 3 hinged to the slider E is completely lowered.

Continuing the action of the transmission means, the other sliders D-A are dragged, and the release sequence is repeated for all the sliders until the closed position is reached.

As the slider D moves away from the slider E, the hooking appendage 7a of the first lever 7 of the rocker E is brought into its respective seat 17 obtained on the guide 1, finally causing the locking of the slat 3 associated with the sliders E and D with respect to the guide 1 and hinged to the slider D, when the slider D reaches the position of maximum distance from the slider E (i.e. the position occupied by the slider E in the closed position of the roof). In such position the slat 3 hinged to the slider D is completely lowered. When the other sliders C-A are dragged, the sequence of hooking to the guide 1 is repeated for all the sliders until the closed position is reached.

## Claims

1. A retractable roof comprising
a pair of parallel guides (1),
a plurality of slats (3) movable along the guides (1) between a closed position, wherein the slats (3) are lowered and cover an area between the guides (1), and an open position, wherein the slats (3) are raised and packed at one end (1a) of the guides (1), and
a plurality of sliders (5) slidable along the guides (1), wherein each slat (3) is at each end supported by one of the guides (1) by means of two of said sliders (5; D, C) - hereinafter first and second slider -, the slat (3) being hinged to the second slider (5; C) and connected to the first and second sliders through a linkage, wherein
the linkage comprises a first rod (7) hinged to each slider (5) at a first hinge point (x1) and a second rod (8) hinged to each slider (5) at a second hinge point (x2), the first rod (7) of the first slider (5; D) and the second rod (8) of the second slider (5; C) being further connected to one another by means of a third rod (9) hinged to both the first and second slider, and
a rocker (11) is further hinged to each slider (5), said rocker comprising a first arm (11a) and a second arm (11b) and being configured to have a barycenter at the first arm (11a), whereby a driving element (13) arranged on the respective slat (3) is provided, the driving element being adapted to be engaged by the second arm (11b) in an inactive position of the rocker (11), a striker element (15) arranged on the slider (5) being further provided, whereby the striker element (15) of the second slider (5; C) is adapted to be engaged by a hooking end (11c) of the first arm (11a) of the rocker (11) of the first slider (5; D) in a hooking position wherein the first and the second slider (5; A, B)) are fixed to each other,
wherein in the open position the sliders (5) are in hooking position, and
wherein during a movement from the open position to the closed position, the driving element (13) of the slat (3) hinged to the first slider (D) engages the second arm (11b) of the rocker (11) of the first slider (5; D) to lift the hooking end (11c) of the rocker (11) of the first slider (5; D) and disengage the hooking end from the striker element (15) of the second slider (5; C), allowing the second slider (5; C) to move away from the first slider (5; D).

2. A roof according to claim 1, wherein the third rod (9) is hinged to the first rod (7) of the first slider (5; D) at an intermediate point of the latter and hinged to an end of the second rod (8) of the second slider (5; C).

3. A roof according to any of the preceding claims, wherein the plurality of sliders (5) comprises two series of sliders arranged respectively on the two guides (1), wherein an end slider (5; A) of each of the two series is operatively connected to transmission means for moving the two series of sliders (5), and an opposite end slider (5; E) of each of the two series is connected to a slat (3) and to a fixed part (6) of the guide by means of a linkage.

4. A roof according to any of the preceding claims, wherein the first rod (7) of the linkage has a hooking appendage (7a) close to the first hinge point (x1), such appendage (7a) is adapted to engage a seat (17) formed integrally with the guide (1) to lock the slat (3) in the closed position, with respect to the guide (1).

## Patentansprüche

1. Einziehbares Dach, umfassend
ein Paar Parallelführungen (1),
eine Vielzahl von Lamellen (3), die entlang der Führungen (1) zwischen einer Schließstellung, in der die Lamellen (3) abgesenkt sind und einen Bereich zwischen den Führungen (1) bedecken, und einer Öffnungsstellung, in der die Lamellen (3) angehoben und an einem Ende (1a) der Führungen (1) gebündelt sind, bewegbar sind, und
eine Vielzahl von Gleitern (5), die entlang der Führungen (1) verschiebbar sind, wobei jede Lamelle (3) an jedem Ende mittels zweier der Gleiter (5; D, C) - im Folgenden erster und zweiter Gleiter - von einer der Führungen (1) getragen wird, wobei die Lamelle (3) an dem zweiten Gleiter (5; C) angelenkt und mit dem ersten und dem zweiten Gleiter über ein Gestänge verbunden ist,
wobei
das Gestänge eine erste Strebe (7), die an einem ersten Gelenkpunkt (x1) an jedem Gleiter (5) angelenkt ist, und eine zweite Strebe (8), die an einem zweiten Gelenkpunkt (x2) an jedem Gleiter (5) angelenkt ist, umfasst, wobei die erste Strebe (7) des ersten Gleiters (5; D) und die zweite Strebe (8) des zweiten Gleiters (5; C) ferner mittels einer dritten Strebe (9), die sowohl an dem ersten als auch dem zweiten Gleiter angelenkt ist, miteinander verbunden sind, und
ein Kipphebel (11) ferner an jedem Gleiter (5) angelenkt ist, wobei der Kipphebel einen ersten Arm (11a) und einen zweiten Arm (11b) umfasst und so ausgestaltet ist, dass er einen Massenmittelpunkt an dem ersten Arm (11a) aufweist, wobei ein Antriebselement (13) vorgesehen ist, das an der jeweiligen Lamelle (3) angeordnet ist, wobei das Antriebselement dafür ausgelegt ist, in einer inaktiven Stellung des Kipphebels (11) von dem zweiten Arm (11b) in Eingriff genommen zu werden, wobei ferner ein Anschlagelement (15) vorgesehen ist, das auf dem Gleiter (5) angeordnet ist, wobei das Anschlagelement (15) des zweiten Gleiters (5; C) dafür ausgelegt ist, von einem Hakenende (11c) des ersten Arms (11a) des Kipphebels (11) des ersten Gleiters (5; D) in einer Einhakstellung in Eingriff genommen zu werden, wobei der erste und der zweite Gleiter (5; A, B) aneinander befestigt sind,
wobei sich die Gleiter (5) in der Öffnungsstellung in einer Einhakstellung befinden, und
wobei das Antriebselement (13) der Lamelle (3), die an dem ersten Gleiter (D) angelenkt ist, während einer Bewegung aus der Öffnungsstellung in die Schließstellung den zweiten Arm (11b) des Kipphebels (11) des ersten Gleiters (5; D) in Eingriff nimmt, um das Hakenende (11c) des Kipphebels (11) des ersten Gleiters (5; D) anzuheben und das Hakenende von dem Anschlagelement (15) des zweiten Gleiters (5; C) zu lösen, wodurch dem zweiten Gleiter (5; C) ermöglicht wird, sich von dem ersten Gleiter (5; D) wegzubewegen.

2. Dach nach Anspruch 1, wobei die dritte Strebe (9) an der ersten Strebe (7) des ersten Gleiters (5; D) an einem Zwischenpunkt der Letzteren angelenkt ist und an einem Ende der zweiten Strebe (8) des zweiten Gleiters (5; C) angelenkt ist.

3. Dach nach einem beliebigen der vorhergehenden Ansprüche, wobei die Vielzahl von Gleitern (5) zwei Reihen von Gleitern umfasst, die jeweils auf den zwei Führungen (1) angeordnet sind, wobei ein Endgleiter (5; A) von jeder der zwei Reihen betriebsfähig mit Getriebemitteln zum Bewegen der zwei Reihen von Gleitern (5) verbunden ist, und ein entgegengesetzter Endgleiter (5; E) von jeder der zwei Reihen mittels eines Gestänges mit einer Lamelle (3) und mit einem feststehenden Teil (6) der Führung verbunden ist.

4. Dach nach einem beliebigen der vorhergehenden Ansprüche, wobei die erste Strebe (7) des Gestänges einen Hakenansatz (7a) in der Nähe des ersten Gelenkpunkts (x1) aufweist, wobei ein solcher Ansatz (7a) dafür ausgelegt ist, einen Sitz (17), der einstückig mit der Führung (1) gebildet ist, in Eingriff zu nehmen, um die Lamelle (3) in der Schließstellung, in Bezug auf die Führung (1), zu verriegeln.

## Revendications

1. Toit rétractable comprenant
une paire de guides parallèles (1),
une pluralité de lattes (3) mobiles le long des guides (1) entre une position fermée dans laquelle les lattes (3) sont abaissées et couvrent une zone entre les guides (1), et une position ouverte dans laquelle les lattes (3) sont soulevées et rangées à une extrémité (1a) des guides (1), et
une pluralité de glisseurs (5) glissant le long des guides (1), où chaque latte (3) est supportée à chaque extrémité par un des guides (1) à l'aide de deux des glisseurs (5 ; D, C) - ci-après premier et deuxième glisseur -, la latte (3) étant articulée au deuxième glisseur (5 ; C) et reliée aux premier et deuxième glisseurs par une liaison,
la liaison comprenant une première tige (7) articulée à chaque glisseur (5) à un premier point d'articulation (x1) et une deuxième tige (8) articulée à chaque glisseur (5) à un deuxième point d'articulation (x2), la première tige (7) du premier glisseur (5 ; D) et la deuxième tige (8) du deuxième glisseur (5 ; C) étant connectées en outre l'un à l'autre à l'aide d'une troisième tige (9) articulée à la fois au premier et au deuxième glisseurs, et
un culbuteur (11) étant articulé en outre à chaque glisseur (5), le culbuteur comprenant un premier bras (11a) et un deuxième bras (11b) et étant configuré pour avoir un barycentre au premier bras (11a), un élément d'entraînement (13) agencé sur la latte (3) respective étant prévu, l'élément d'entraînement étant adapté pour être engagé par le deuxième bras (11b) dans une position inactive du culbuteur (11), un élément d'attaque (15) agencé sur le glisseur (5) étant également prévu, l'élément d'attaque (15) du deuxième glisseur (5 ; C) étant adapté pour être engagé par une extrémité de crochet (11c) du premier bras (11a) du culbuteur (11) du premier glisseur (5 ; D) dans une position d'accrochage dans laquelle le premier et le deuxième glisseurs (5 ; A, B) sont fixés l'un à l'autre,
dans la position ouverte, les glisseurs (5) étant dans une position d'accrochage, et pendant un mouvement de la position ouverte à la position fermée, l'élément d'entraînement (13) de la latte (3) articulée au premier glisseur (D) entraînant le deuxième bras (11b) du culbuteur (11) du premier glisseur (5 ; D) pour soulever l'extrémité d'accrochage (11c) du culbuteur (11) du premier glisseur (5 ; D) et pour séparer l'extrémité d'accrochage de l'élément d'attaque (15) du deuxième glisseur (5 ; C), permettant au deuxième glisseur (5 ; C) de s'éloigner du premier glisseur (5 ; D).

2. Toit selon la revendication 1, **caractérisé en ce que** la troisième tige (9) est articulée à la première tige (7) du premier glisseur (5 ; D) à un point intermédiaire du dernier et articulée à une extrémité de la deuxième tige (8) du deuxième glisseur (5 ; C).

3. Toit selon l'une des revendications précédentes, **caractérisé en ce que** la pluralité de glisseurs (5) comprend deux séries de glisseurs agencés respectivement sur les deux guides (1), un glisseur d'extrémité (5 ; A) de chacune des deux séries étant fonctionnellement attaché à des moyens de transmission pour mettre en mouvement les deux séries de glisseurs (5), et un glisseur d'extrémité opposé (5 ; E) de chacune des deux séries étant relié à une latte (3) et à une partie fixe (6) du guide à l'aide d'une liaison.

4. Toit selon l'une des revendications précédentes, **caractérisé en ce que** la première tige (7) de la liaison comprend un appendice d'accrochage (7a) proche du premier point d'articulation (x1), un tel appendice (7a) étant adapté pour s'engager dans un siège (17) formé en une seule pièce avec le guide (1) pour bloquer la latte (3) dans la position fermée, par rapport au guide (1).
